# EUROPÄISCHE PATENTSCHRIFT

(11) **EP 0 935 537 B1**
(45) Veröffentlichungstag und Bekanntmachung des Hinweises auf die Patenterteilung: **27.02.2002**
(21) Anmeldenummer: 97950073.3
(22) Anmeldetag: 03.11.1997
(51) Int. Cl.: B60G 3/20

(54) **EINZELRADAUFHÄNGUNG**
SINGLE WHEEL SUSPENSION
SUSPENSION INDEPENDANTE

(30) Priorität: 08.11.1996 DE 19646081
(43) Veröffentlichungstag der Anmeldung: 18.08.1999
(73) Patentinhaber: ZF FRIEDRICHSHAFEN Aktiengesellschaft, 88038 Friedrichshafen (DE)
(72) Erfinder: WIMMER, Hans, D-94127 Neuburg (DE)
(86) Internationale Anmeldenummer: EP9706049
(87) Internationale Veröffentlichungsnummer: WO9821058

(56) Entgegenhaltungen:
- DE-A- 3 345 952
- DE-A- 3 718 137
- DE-A- 3 740 954
- DE-C- 4 242 708
- GB-A- 2 049 576
- US-A- 2 153 083
- US-A- 3 103 370

## Beschreibung

Die Erfindung betrifft eine Einzelradaufhängung für Kraftfahrzeuge. Die deutsche Offenlegungsschrift 33 45 952 beschreibt eine Einzelradaufhängung mit Radnabe, Achsschenkelträger und Doppel-Querlenkern. Dabei sind die Querlenker am Achsschenkelträger mittels eines Drehlagergelenks befestigt. Die Drehlagerwelle ragt auf beiden Seiten aus dem Achsschenkelträger heraus und verbreitert ihn damit erheblich. Diese seitliche Anbringung der Querlenker am Achsschenkelträger begrenzt den Radeinschlag beim Einlenken.

Weiterhin zeigt das Dokument GB-A-2 049 576 eine Einzelradaufhängung mit Kugelgelenken zwischen Achsschenkel und Querlenker.

Der Erfindung liegt die Aufgabe zugrunde, eine Einzelradaufhängung zu schaffen, bei der die Querlenker derart am Achsschenkelträger angebracht sind, daß der Radeinschlag dadurch nicht limitiert wird.

Diese Aufgabe wird mit einer, auch die kennzeichnenden Merkmale des Hauptanspruchs aufweisenden gattungsgemäßen Einzelradaufhängung gelöst. Dabei hat ein Kugelgelenk den Vorteil, daß es, im Gegensatz zu einem Drehlagergelenk oder einem Molekulargelenk sehr kompakt aufgebaut ist.

Vorzugsweise ist der untere Querlenker mittels diesem kompakten Kugelgelenk mit dem Achsschenkelträger an dessen Unterseite verbunden ist. Diese Anbringung des Querlenkers vergrößert die seitliche Ausdehnung des Achsschenkelträgers, d. h. seine Ausdehnung entlang seiner näherungsweise in Fahrtrichtung verlaufende Querachse nicht. Damit wird der maximale Radeinschlag nicht durch die Anbringung des Querlenkers begrenzt. Der Querlenker kann damit möglichst weit außen angebracht werden. Dadurch wird eine bessere Achskinematik erzielt. Das Kugelgelenk hat im Gegensatz zu einem Drehlagergelenk drei Freiheitsgrade. Es wird aber nur ein Freiheitsgrad der Drehung der Kugel zum Einfedern des Fahrzeuges benötigt. Die anderen Möglichkeiten der Drehung sollen unterbunden werden. Die Nickbewegung, d. h. eine Verdrehung des Achsschenkelträgers um die Fahrzeugquerachse wird verhindert durch einen hinreichenden Abstand der Befestigungen des oberen und unteren Querlenkers. Eine Verdrehung des Achsschenkelträgers um die Fahrzeughochachse würde eine Ungenauigkeit der Lenkung mit sich bringen, denn der Lenkeinschlag, d. h. die Drehung der Räder um die Fahrzeughochachse soll definiert am Achsschenkelbolzen, der die Verbindung zwischen Achsschenkelträger und Radnabe darstellt, erfolgen. Diese Verdrehung wird unterbunden, indem der obere Querlenker mit einem Kegelrollenlagerpaar mit dem Achsschenkelträger verbunden ist. Die Lagerbasis der Kegelrollenbahnen ist dabei derart breit, daß diese Lager alleine das Drehmoment des Achsschenkelträgers um die Hochachse des Fahrzeuges aufnehmen. Der Achsschenkelträger muß dabei eine hinreichende Verwindungssteifigkeit aufweisen.

Vorzugsweise sitzt die Kugel des Kugelgelenks in einer Gleitlagerschale. Das Kugelgelenk ist vorteilhaft mit dem Achsschenkelträger über einen Bolzen verbunden, der einen konischen Abschnitt und einen Abschnitt mit Gewinde aufweist und in ein konisches Loch im Achsschenkelträger im Kegelsitz eingreift. Der Kegelsitz gewährleistet die exakte Positionierung des Kugelgelenks. Dieser Bolzen wird vorteilhafter Weise im Achsschenkelträger von der Gegenseite mit einer Mutter gehalten. Diese Mutter ist günstiger Weise in einer Bohrung in dem Achsschenkelträger abgesenkt, so daß sie nicht aus diesem herausragt und dadurch geschützt ist. Der Achsschenkelträger besitzt damit ein Durchgangsloch, das unten konisch ist und sich dann als gestufter Zylinder fortsetzt. Die Stufe ist die Anschlagsfläche für die Mutter.

Vorzugsweise ist der untere Querlenker bezüglich der Fahrzeugbreite weiter außen am Achsschenkelträger angebracht als der obere. Damit wird die Achskinematik verbessert.

Vorzugsweise sind der untere und der obere Querlenker als Dreieckslenker ausgebildet.

In einer Figur ist eine Ausgestaltung der Erfindung dargestellt.

Ein Achsschenkel mit Radnabe 1 ist über einen Achsschenkelbolzen an einem Achsschenkelträger 2 angebracht. Der Achsschenkelträger 2 ist an seiner Unterseite über ein Kugelgelenk 3 mit einem Querlenker 4 verbunden. Dieser ist über ein Drehlager 5 am Fahrzeugrahmen 6 befestigt. Oberhalb von diesem Querlenker 4 verbindet ein zweiter Querlenker 7 über ein Kegelrollenlagerpaar 8 den oberen Teil des Achsschenkelträgers 2 über ein Drehlager 9 mit dem Fahrzeugrahmen 6. Das Kugelgelenk 3 ist über einen Bolzen 10 und eine Mutter 11 an dem Achsschenkelträger 2 befestigt.

### Bezugszeichenliste

- 1: Achsschenkel mit Radnabe
- 2: Achsschenkelträger
- 3: Kugelgelenk
- 4: Querlenker
- 5: Drehlager
- 6: Fahrzeugrahmen
- 7: Querlenker
- 8: Kegelrollenlagerpaar
- 9: Drehlager
- 10: Bolzen
- 11: Mutter

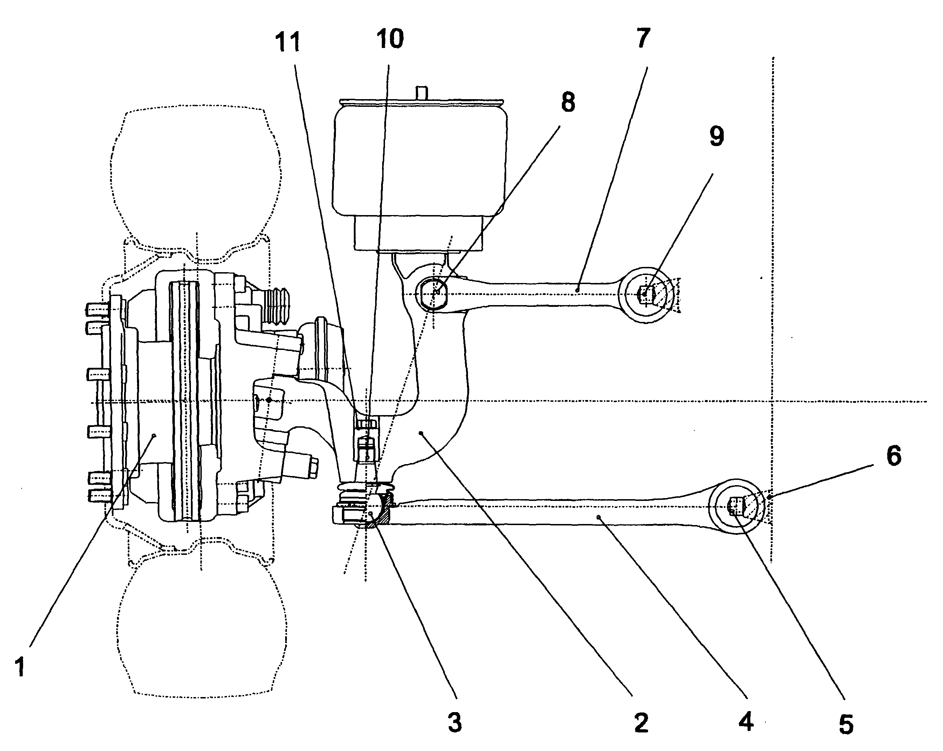

## Patentansprüche

1. Einzelradaufhängung für ein Kraftfahrzeug mit einem Achsschenkel mit Radnabe (1), einem Achsschenkelträger (2), einem oberen Querlenker (7) und einem unteren Querlenker (4), **dadurch gekennzeichnet, daß** der untere Querlenker (4) derart mit dem Achsschenkelträger (2) über ein Kugelgelenk (3) verbunden ist, daß die Anbringung des Querlenkers (4) die Ausdehnung des Achsschenkelträgers (2) entlang einer näherungsweise in Fahrtrichtung verlaufenden Achse nicht vergrößert und welche einen oberen Querlenker (7) aufweist, welcher dergestalt über ein Lager (8) mit dem Achsschenkelträger (2) verbunden ist, daß die um die Hochachse des Fahrzeugs entstehenden Drehmomente über das Lager (8) aufgenommen werden.

2. Einzelradaufhängung nach Anspruch 1,
**dadurch gekennzeichnet, daß**
der untere Querlenker (4) mit dem Achsschenkelträger (2) an dessen Unterseite verbunden ist.

3. Einzelradaufhängung nach Anspruch 1 oder 2,
**dadurch gekennzeichnet, daß**
das Kugelgelenk (3) eine Gleitlagerschale aufweist, in der die Kugel sitzt.

4. Einzelradaufhängung nach Anspruch 1 oder 2,
**dadurch gekennzeichnet, daß**
das Kugelgelenk (3) mit dem Achsschenkelträger (2) über einen Bolzen (10) verbunden ist, der einen konischen Abschnitt und einen Abschnitt mit Gewinde aufweist und in ein konisches Loch im Achsschenkelträger (2) im Kegelsitz eingreift.

5. Einzelradaufhängung nach Anspruch 4,
**dadurch gekennzeichnet, daß**
der Bolzen (10) im Achsschenkelträger (2) von der Gegenseite mit einer Mutter (11) gehalten wird.

6. Einzelradaufhängung nach Anspruch 1 oder 2,
**dadurch gekennzeichnet, daß**
der obere Querlenker (7) mit dem Achsschenkelträger (2) über Kegelrollenlager (8) verbunden ist und die Lagerbasis der Kegelrollenbahnen derart breit ist, daß diese Lager alleine das Drehmoment des Achsschenkelträgers (2) um die Hochachse des Fahrzeuges aufnehmen.

7. Einzelradaufhängung nach Anspruch 1 oder 2,
**dadurch gekennzeichnet, daß**
der untere Querlenker (4) bezüglich der Fahrzeugbreite weiter außen am Achsschenkelträger (2) angebracht ist als der obere.

8. Einzelradaufhängung nach Anspruch 1 oder 2,
**dadurch gekennzeichnet, daß**
der untere und der obere Querlenker (4,7) eine dreieckige Form aufweisen.

## Claims

1. Independent wheel suspension for a motor vehicle with a stub axle with a wheel hub (1), a stub axle carrier (2), an upper wishbone (7) and a lower wishbone (4), **characterised in that** the lower wishbone (4) is connected to the stub axle carrier (2) via a ball-and-socket joint (3) such that the attachment of the wishbone (4) does not increase the extent of the stub axle carrier (2) along an axis extending approximately in the direction of travel, and which comprises an upper wishbone (7), which is connected via a bearing (8) to the stub axle carrier (2) such that the torques arising about the vertical axis of the vehicle are absorbed via the bearing (8).

2. Independent wheel suspension according to Claim 1, **characterised in that**
the lower wishbone (4) is connected to the stub axle carrier (2) at the underside thereof.

3. Independent wheel suspension according to Claim 1 or 2, **characterised in that**
the ball-and-socket joint (3) comprises a plain bearing bush, in which the ball is seated.

4. Independent wheel suspension according to Claim 1 or 2, **characterised in that**
the ball-and-socket joint (3) is connected to the stub axle carrier (2) via a bolt (10), which comprises a conical section and a section with a thread and engages in a conical hole in the stub axle carrier (2) with a taper fit.

5. Independent wheel suspension according to Claim 4, **characterised in that**
the bolt (10) is held in the stub axle carrier (2) from the opposite side by a nut (11).

6. Independent wheel suspension according to Claim 1 or 2, **characterised in that**
the upper wishbone (7) is connected to the stub axle carrier (2) via tapered roller bearings (8), and the bearing base of the tapered roller tracks is of a width such that these bearings alone absorb the torque of the stub axle carrier (2) about the vertical axis of the vehicle.

7. Independent wheel suspension according to Claim 1 or 2, **characterised in that**
the lower wishbone (4) is attached to the stub axle carrier (2) further outwards in relation to the vehicle width than the upper wishbone.

8. Independent wheel suspension according to Claim 1 or 2, **characterised in that**
the lower and the upper wishbones (4, 7) are of a triangular shape.

## Revendications

1. Suspension à roues indépendantes pour un véhicule automobile dotée d'une fusée d'essieu avec moyeu de roue (1), d'un support de fusée d'essieu (2), d'un bras oscillant transversal supérieur (7) et d'un bras oscillant transversal inférieur (4), **caractérisé en ce que** le bras oscillant transversal inférieur (4) soit lié au support de fusée d'essieu (2) par l'intermédiaire d'un joint à rotule (3) de façon à ce que l'installation du bras oscillant transversal inférieur (4) n'augmente pas l'encombrement du support de fusée d'essieu (2) le long d'un axe orienté approximativement dans le sens de marche, et **en ce que** la suspension soit dotée d'un bras oscillant transversal supérieur (7), qui est lié par l'intermédiaire d'un palier (8) au support de fusée d'essieu (2) de façon à ce que les couples se produisant autour de l'axe vertical du véhicule soient absorbés par le palier (8).

2. Suspension à roues indépendantes selon la revendication 1, **caractérisée en ce que** le bras oscillant transversal inférieur (4) soit lié à la face inférieure du support de fusée d'essieu (2).

3. Suspension à roues indépendantes selon les revendications 1 ou 2, **caractérisée en ce que** le joint à rotule (3) soit doté d'une cuvette, dans laquelle est logée la bille.

4. Suspension à roues indépendantes selon les revendications 1 ou 2, **caractérisée en ce que** le joint à rotule (3) soit lié au support de fusée d'essieu (2) par l'intermédiaire d'un goujon (10), doté d'une section conique et d'une section filetée et qui engrène dans un trou conique du support de fusée d'essieu (2) situé dans l'embase conique.

5. Suspension à roues indépendantes selon la revendication 4, **caractérisée en ce que** le goujon (10) logé dans le support de fusée d'essieu (2) est maintenu, du côté opposé, par un écrou (11).

6. Suspension à roues indépendantes selon les revendication 1 ou 2, **caractérisée en ce que** le bras oscillant transversal supérieur (7) est lié au support de fusée d'essieu (2) par l'intermédiaire d'un roulement à rouleaux coniques (8) et **en ce que** la base des chemins des rouleaux coniques soit si large que ces roulements puissent absorber le couple du support de fusée d'essieu (2) se produisant autour de l'axe vertical du véhicule.

7. Suspension à roues indépendantes selon les revendications 1 ou 2, **caractérisée en ce que** le bras oscillant transversal inférieur (4) soit positionné - par rapport à la largeur du véhicule - plus vers l'extrémité du support de fusée d'essieu (2) que le bras oscillant transversal supérieur.

8. Suspension à roues indépendantes selon les revendications 1 ou 2, **caractérisée en ce que** le bras oscillant transversal inférieur et le bras oscillant transversal supérieur (4, 7) aient une forme triangulaire.
